(19) Europäisches Patentamt
European Patent Office
Office européen des brevets

(11) **EP 3 293 596 A1**

(12) **EUROPEAN PATENT APPLICATION**

(43) Date of publication:
**14.03.2018 Bulletin 2018/11**

(51) Int Cl.:
**G05D 1/00** *(2006.01)* **G05D 1/02** *(2006.01)*
**G05D 1/08** *(2006.01)* **B64C 39/02** *(2006.01)*
**G01S 5/06** *(2006.01)*

(21) Application number: **17186080.2**

(22) Date of filing: **14.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.09.2016 TW 105129173**

(71) Applicant: **Baltek Co., Limited
Wanchai, Hongkong (CN)**

(72) Inventor: **LIAO, Tzu-Chuan
Sanxia Dist., New Taipei City 237 237 (TW)**

(74) Representative: **2K Patentanwälte Blasberg
Kewitz & Reichel
Partnerschaft mbB
Schumannstrasse 27
60325 Frankfurt am Main (DE)**

(54) **ORIENTATION CONTROL METHOD FOR DRONE**

(57) An orientation control method for a drone (3) is disclosed. The method receives wireless signal sent wirelessly from a target device (5) by at least three receivers (33) arranged on the drone (5), and detects the phase of the wireless signal respectively received by each of the three receivers (33) with a phase detector (34) of the drone. Next, the method calculates current relative orientation of the drone (3) with respect the target device (5) through a phase differences of the three phases of the three receivers (33). Next, the method controls the drone (3) to move to orientate user-designated direction according to the calculated current relative orientation and a directional signal sent wirelessly from a remote control (4).

FIG.5

**Description**

BACKGROUND OF THE INVENTION

Field of the Invention

The present invention relates to a drone, especially to an orientation control method for drone.

Description of Related Art

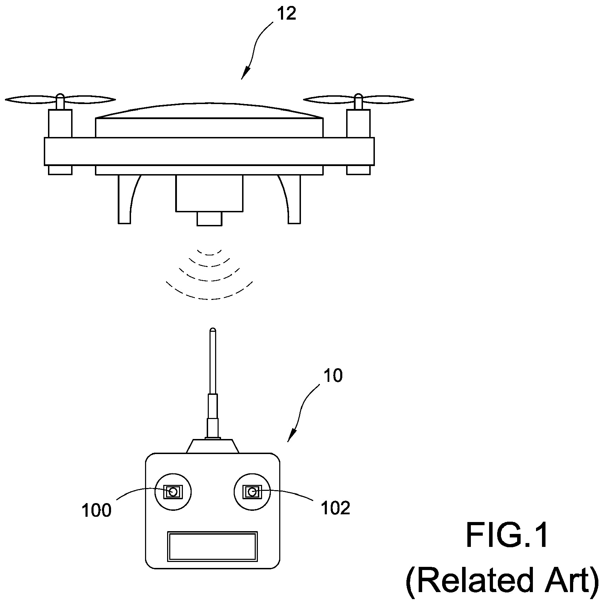

Fig. 1 is a schematic view of a related-art drone system (also referred to unmanned aircraft system, UAS). As shown in Fig. 1, the drone system 12 is generally controlled by joysticks 100, 102 arranged on a remote control 10. More particularly, a user may control the joysticks 100, 102 to move toward a specific direction or rotate to a specific orientation.

The remote control 10 is operated with the drone system 12 as axial origin; this renders the remote control 10 failing to provide intuitional operation for user. Taking the drone system 12 to perform selfie as example, the orientation of the drone system 12 is opposite to the orientation of user if the drone system 12 faces the user. Namely, the left side of the drone system 12 is the right side of the user. The user needs to operate the joystick 100 leftward to move the drone system 12 rightward with respect to user, this increasing the error possibility.

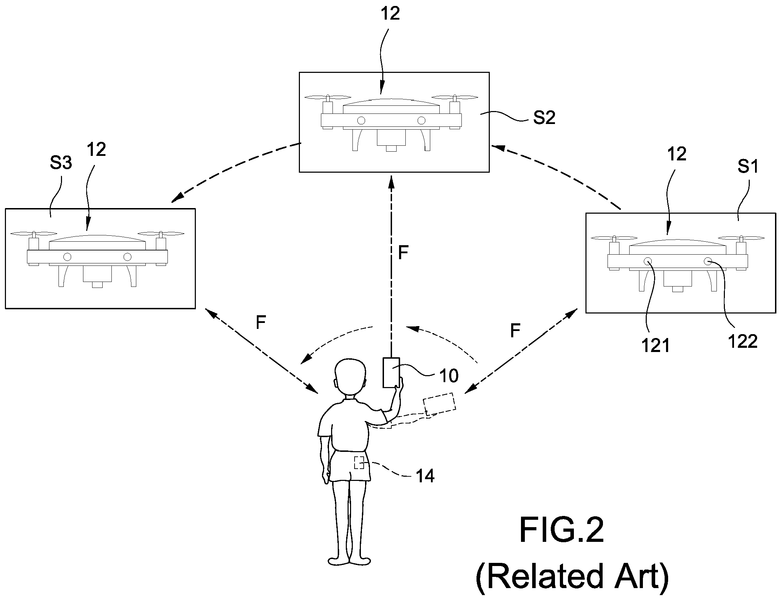

Fig. 2 is a schematic view showing the orientation operation of a related-art drone system. To overcome above-mentioned problem, researchers had proposed an orientation-based control method for the drone system 12. More particularly, user may hold the remote control 10 and wear a target device 14 to implement the orientation-based control method. The target device 14 continual sends ultrasonic signal to the drone system 12 such that the drone system 12 may determine a distance between the drone system 12 and the target device 14 (namely, the distance between the drone system 12 and the user) and an orientation of the drone system 12 with respect the target device 14 by using the ultrasonic signal.

With reference to Fig. 2, when the user operates the remote control 10 to perform an orientation operation to point to a first position S1, the drone system 12 moves toward the first position S1 based on the orientation operation. When the user operates the remote control 10 to perform an orientation operation to point to a second position S2, the drone system 12 moves toward the second position S2 based on the orientation operation. When the user operates the remote control 10 to perform an orientation operation to point to a third position S3, the drone system 12 moves toward the third position S3 based on the orientation operation. The drone system 12 keeps facing the target device 14 and keeps a trail distance F (for example 3 meters) with respect to the target device 14 during the movement thereof. Therefore, the user may control the movement of the drone system 12 more intuitionally (namely using the drone system 12 as axial origin).

In related art, the drone system 12 mainly uses two built-in receivers 121 and 122 to receive the supersonic signals sent from the target device 14 and then determines the distance and orientation of the drone system 12 with respect to the target device 14 based on the supersonic signals.

For example, the propagation speed of the supersonic signal is around 340 m/sec; therefore, the distance between the drone system 12 and the target device 14 is calculated to be $(0.01-0)\times340=3.4$ (meters) if the target device 14 sends the supersonic signal at 0th second and the receivers 121 and 122 receive the supersonic signals at 0.01 seconds.

Moreover, if the drone system 12 faces directly toward the target device 14, the receivers 121 and 122 receive the supersonic signals at the same time due to equal distance between the receivers 121 and 122 and the target device 14. If the drone system 12 does not face directly toward the target device 14, the receivers 121 and 122 receive the supersonic signals at difference time (for example, at 0.010 seconds and 0.013 seconds respectively). In related art, the deviation angle of the drone system 12 is calculated based on above-mentioned time difference (namely, 0.013 seconds-0.010 seconds = 0.003 seconds for above example), thus determining an orientation of the drone system 12 with respect to the target device 14.

However, the supersonic signal is susceptible to interference to other signal. Due to the high directivity of the supersonic signal, the propagation of the supersonic signal will be influenced if obstacle (such as human body) is present between the drone system 12 and the target device 14.

SUMMARY OF THE INVENTION

It is an object of the invention to provide an orientation control method for a drone, the method directly calculates the relative orientation of the drone with respect to a target device based on the wireless signals received by the drone, and orientates the drone.

Accordingly, the orientation control method of the present invention uses at least three receivers to receive a set of wireless signals sent from a target device respectively and uses a phase detector to detect the phases of the wireless signals received by the at least three receivers. Afterward, the drone calculates a relative orientation of the drone with respect to the target device based on a phase difference between the wireless signals received by the at least three receivers and receives a directional signal sent from a remote control, thus controls a movement of the drone based on the relative orientation and the directional signal. Therefore, the drone can be correctly orientated the user-indicated direction.

In comparison with the prior art drone, the present invention uses a plurality of receivers to respectively receive wireless signals sent from a single source and directly determines the orientation of the drone with respect to the target device, thus correctly orientate the drone toward the target device. Moreover, due to correct orientation of the drone, the drone can be precisely moved to user designated position when user instructs the drone to move and rotate, and then rotated to user designated orientation and direction.

BRIEF DESCRIPTION OF DRAWING

One or more embodiments of the present disclosure are illustrated by way of example and not limitation in the figures of the accompanying drawings, in which like references indicate similar elements. These drawings are not necessarily drawn to scale.

Fig. 1 is a schematic view of a related-art drone system.
Fig. 2 is a schematic view showing the orientation operation of a related-art drone system.
Fig. 3 is a schematic diagram of the drone system according to a first embodiment of the present invention.
Fig. 4 shows a side view of the drone according to the first embodiment of the present invention.
Fig. 5 is an orientation control flowchart according to the first embodiment of the present invention.
Fig. 6A shows the phase difference according to the first embodiment.
Fig. 6B shows the phase difference according to the second embodiment.
Fig. 7A is drawing showing the movement of the drone according to the first embodiment.
Fig. 7B is drawing showing the movement of the drone according to the second embodiment.
Fig. 8 is an orientation control flowchart according to the second embodiment of the present invention.
Fig. 9 shows the relative positions of elements in the first embodiment.

DETAILED DESCRIPTION OF THE INVENTION

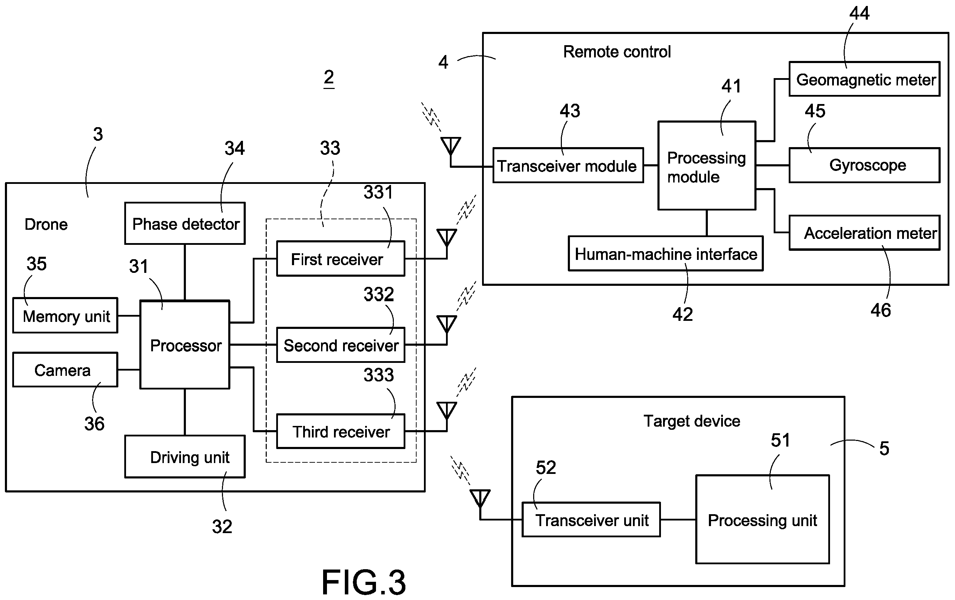

Fig. 3 is a schematic diagram of the drone system according to a first embodiment of the present invention. The present invention discloses an orientation control method (hereafter referred to the method) for drone system and the method can be used in the drone system 2 shown in Fig. 3. More particularly, the drone system 2 mainly comprises a drone 3 (such as steamboat, hot-air balloon, rotorcraft or airplane), a remote control 4 and a target device 5. With the method of the present invention, user may perform orientation operation to the drone 3 with the remote control 4 and control the fly of the drone 3 with the target device 5 as axial origin.

The drone 3 comprises a processor 31, a driving unit 32, a plurality of receivers (or transceivers) 33, a phase detector 34, a memory unit 35 and a camera 36. The processor 31 electrically connects with the driving unit 32, the receivers 33, the phase detector 34, the memory unit 35 and the camera 36. The driving unit 32 is used to control the movement (horizontal movement or vertical movement) and the rotation of the drone 3. The memory unit 35 is used to store data and the camera 36 is used to fetch image. The processor 31 is used to control the drone 3 by controlling the above units.

The receivers 33 respectively receive wireless signals sent from the remote control 4 and the target device 5. The phase detector 34 is used to detect the phase difference between the wireless signals received by the receivers 33. In this application, the drone 3 first uses the processor 31 to calculate a phase difference between the wireless signals received by the receivers 33 and then determines the orientation of the drone 3 with respect to the target device 5 (generally worn by user or by the object to be photo-taken by the camera 36). The drone 3 can then be orientated to facilitate the control of the drone 3 through the remote control 4 for user.

The remote control 4 comprises a processing module 41, a human-machine interface 42, a transceiver module (or receiver module) 43, a geomagnetic meter 44, a gyroscope 45 and an acceleration meter 46, where the processing module 41 electrically connects with the human-machine interface 42, the transceiver module 43, the geomagnetic meter 44, the gyroscope 45 and the acceleration meter 46. In this application, the user holds the remote control 4 to directly perform orientation operation. In an embodiment, after receiving an orientation operation of user, the remote control 4 may obtain the azimuth angle thereof (for example, north-east or south-west) by sensing the geomagnetic change through using the geomagnetic meter 44, obtain the elevation angle thereof through using the gyroscope 45 (for example, a three-axis gyroscope) and obtain a moving acceleration thereof through using the acceleration meter 46 (for example, a three-axis acceleration meter).

In this embodiment, the processing module 41 of the remote control 4 performs calculation to generate an orientation azimuth angle based on the azimuth angle, generate an orientation elevation angle based on the elevation angle and/or the moving acceleration. The processing module 41 generates a directional signal based on the directional azimuth angle and the directional elevation angle. The transceiver module 43 sends the directional signal outward.

The human-machine interface 42 (such as knob, button, joystick or the combination thereof) receives operations of user and modifies the directional signal based on the contents in the received operations of user (such as clockwise rotating the drone 3 by 20 degree or approaching the user by 10 centimeters and so on), thus controlling the drone 3 for movement or rotation with corresponding angle. In another embodiment, the human-machine interface 42 may also include signal indicator such as display screen, loud speaker, indication lamp to feedback information of the drone 3 for user.

The processing module 41 generates the directional signal based on the sensed information from the geomagnetic meter 44, the gyroscope 45 and the acceleration meter 46 and the operation information from the human-machine interface 42. Moreover, the transceiver module 43 sends the directional signal outward. The processing module 41 further controls the processing module 41 to receive related information for the drone 3 sent from external devices and display/indicate the related information through the human-machine interface 42.

Preferably, the casing of the remote control 4 is fit for single hand operation and for holding by user. The user can smoothly operate the remote control 4 to point to the desired orientation and more intuitionally control the drone 3 to move to the destined direction/orientation or position.

The target device 5 mainly includes a processing unit 51 and a transceiver unit 52 electrically connected with the processing unit 51.

Preferably, the target device 5 is worn by user, where the user is a user holding the remote control 4 or an object to be photo-taken by the drone 3 (for example, the drone 3 conducting a selfie mode to take photo for user). The target device 5 uses the processing unit 51 to calculate the position information thereof (namely, the position information of user) and generate a wireless signal based on the position information. The wireless signal is sent by the transceiver unit 52. The drone 3 identifies the position of the target device 5 by the received wireless signal and then performs positioning (orientating), movement, and rotation with the target device 5 as axial origin.

More particularly, the receivers 33, the transceiver module 43, and the transceiver unit 52 are wireless radio wave receivers (transceivers), the directional signal and the wireless signal are wireless radio wave signals, where the wireless signal sent by the target device 5 has a wavelength of $\lambda$.

In the present invention, the receivers 33 include at least a first receiver 331, a second receiver 332 and a third receiver 333. The drone 3 may directly calculate the orientation of the drone 3 with respect to the target device 5 based on phase differences of wireless signals received by the three receivers 33. Therefore, the drone 3 and the target device 5 can be dispensed with the GPS device and need not receive external positioning signals by bluetooth or other wireless transmission scheme. The cost of the drone system 2 is reduced and the positioning (orientating) accuracy of the drone 3 is enhanced.

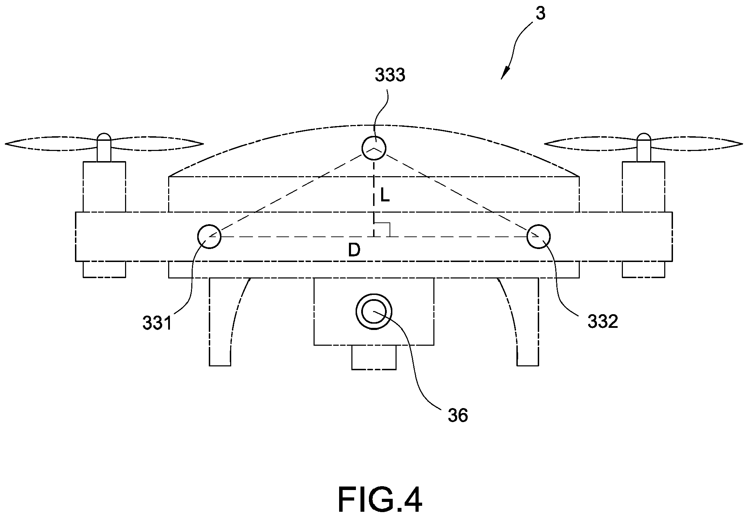

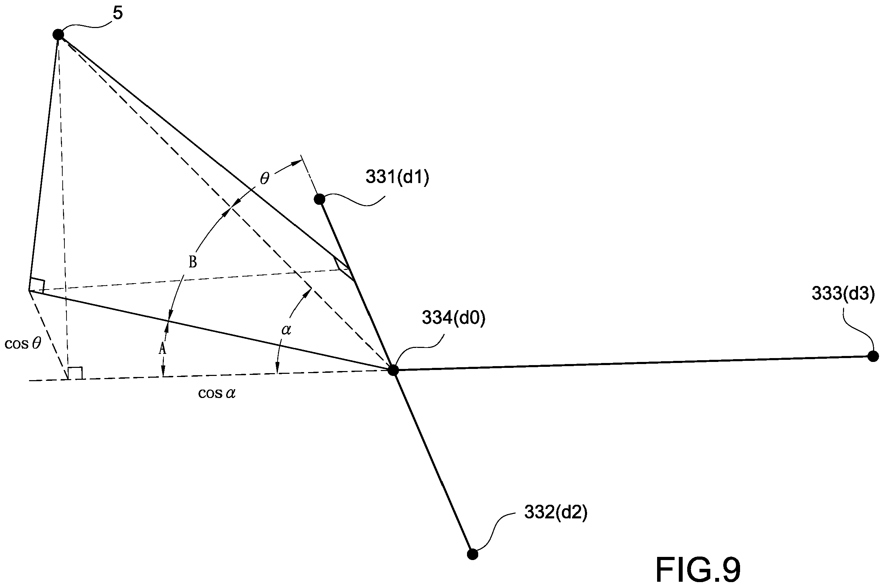

Fig. 4 shows a side view of the drone according to the first embodiment of the present invention. As mentioned above, the drone 3 of the present invention has at least three receivers 33 therein to perform positioning (orientating) for the drone 3 without using additional positioning device (such as GPS device). As shown in Fig. 4, the distance between the first receiver 331 and the second receiver 332 is D (for example but not limited to 30 cm), the distance between the midpoint (midpoint 334 shown in Fig. 9) of the first receiver 331 and the second receiver 332 and the third receiver 333 is L.

In a preferred embodiment, the receivers 33 are arranged at vertices of an isosceles triangle (namely, the distance between the first receiver 331 and the third receiver 333 is equal to the distance between the second receiver 332 and the third receiver 333) or arranged at vertices of an equilateral triangle, but the scope of the present invention is not limited to above examples. In the present invention, the wavelength $\lambda$ of the wireless signal is equal to or slightly larger than two times of the distance D between the first receiver 331 and the second receiver 332, namely, $\geq 2D$.

As mentioned above, the present invention performs positioning (orientating) by using the phase difference of the received wireless signals. When the phase difference of the wireless signals received by the first receiver 331 and the second receiver 332 is zero and when the phase difference of the wireless signal corresponding to the midpoint and the wireless signal received by the third receiver 333is also zero, it means that the drone 3 orientates toward (faces) the target device 5 directly. The camera 36 arranged on the front face of the drone 3 also orientates toward (faces) the target device 5 directly (namely faces the user directly) when the drone 3 orientates toward (faces) the target device 5 directly. Therefore, user can control the drone 3 for selfie.

The method of the present invention will be described in detail below. It should be noted that the method described in various embodiments of the present invention can be implemented by the drone system 2 shown in Fig. 2. More particularly, the memory unit 35 of the drone 3 further stores a computer program including computer-executable code. The processor 31 can control the drone 3 to perform the steps of the invention when the processor 31 executes the computer program.

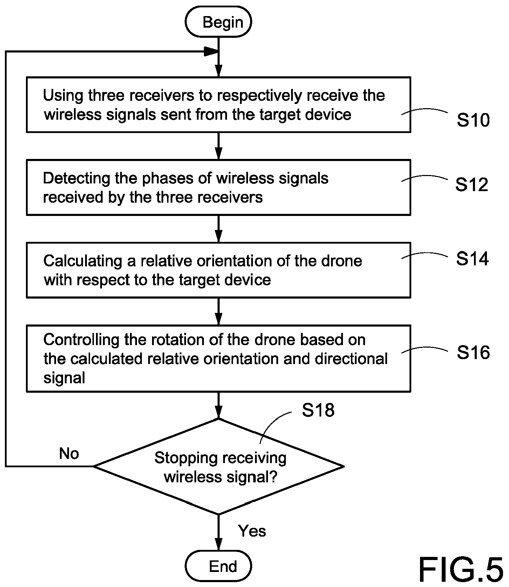

Fig. 5 is an orientation control flowchart according to the first embodiment of the present invention. In step S10, the target device 5 continually sends the wireless signal after the drone system 2 is activated (turned on), and the three receivers 33 respectively receive the wireless signals sent from the target device 5. More particularly, the target device 5 continually sends the wireless signal through broadcasting. Afterward, in step S12, the drone 3 uses the phase detector 34 to detect the phases of wireless signals received by the three receivers 33 and the processor 31 calculates a phase differences based on the phases detected by the phase detector 34. More particularly, the phase differences include a first phase difference between the wireless signals received by the first receiver 331 and the second receiver 332 and a second phase difference between the wireless signal corresponding to the midpoint 334 (for example the wireless signal corresponding to the midpoint 334 may be obtained by interpolating the wireless signals received by the first receiver 331 and the second receiver 332) and the signals received at the third receiver 333.

Afterward, the processor 31 calculates a relative orientation of the drone 3 with respect to the target device 5 in step S 14. In this embodiment, the relative orientation comprises an included angle between a plane connecting the first receiver 331 and the second receiver 332 and the target device 5, and an included angle between a plane connecting the midpoint 334 and the third receiver 333 and the target device 5.

During reception of the wireless signals, the drone 3 uses one of or all of the three receivers 33 to receive the directional signal from the remote control 4. The processor 31 of the drone 3 controls the movement of the drone 3 based on the relative orientation and the directional signal.

More particularly, the processor 31 calculates a relative orientation of the drone 3 with respect to the target device 5 based on the above-mentioned phase differences, and automatically controls the movement (or rotation) of the drone 3 based on the calculated relative orientation such that the drone 3 orientates toward (faces) the target device 5 directly. If the user operates the remote control 4 to send the directional signal and the directional signal includes signal controlling the drone 3 to rotate, the processor 31 fine tunes the direction of the drone 3 based on the directional signal. In one embodiment, the drone 3 mainly provides selfie function. Therefore, the above mentioned movement or rotation renders the drone 3 to move or rotate to orientate toward (face) the target device 5 directly or renders the camera (not shown in Fig. 4) of the drone 3 to move or rotate to orientate toward (face) the target device 5 directly.

After the step S16, the processor 31 determines whether the three receivers 33 stop receiving the wireless signals (step S18), namely whether the target device 5 is turned off, or the communication between the drone 3 and the target device 5/the remote control 4 is terminated. If the three receivers 33 stop receiving the wireless signal, the processor 31 ends the orientation control method. If the three receivers 33 continually receive the wireless signals, the processor 31 repeatedly executes step S10 to step S16 to continually orientate the drone 3 and control the movement of the drone 3.

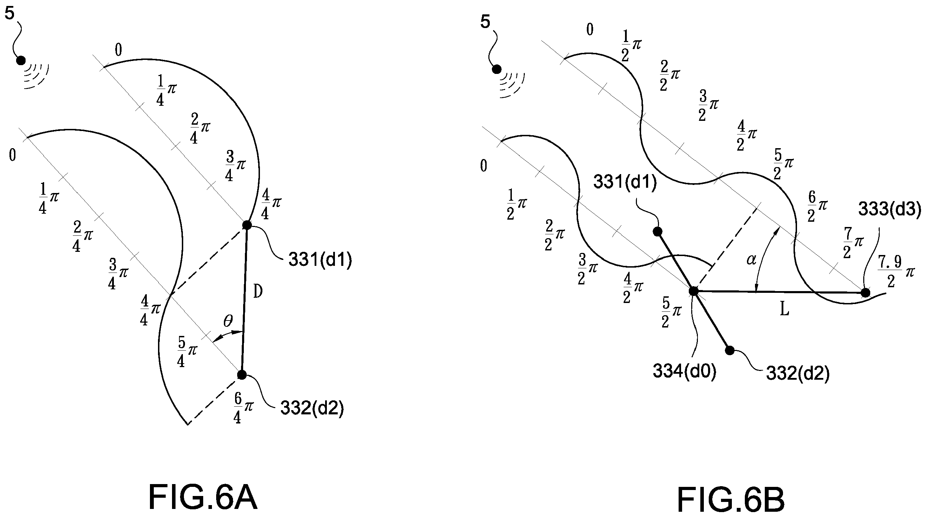

With reference both to Fig. 6A and 6B, those figures show the phase differences according to the first embodiment and the second embodiment respectively. With reference to Fig. 6A, if the drone 3 does not orientate toward the target device 5, the distance d1 between the first receiver 331 and the target device 5 and the distance d2 between the second receiver 332 and the target device 5 are different. Therefore, the wireless signal sent by the target device 5 and received by the first receiver 331 and the wireless signal sent by the target device 5 and received by the second receiver 332 have different phases. In the embodiment shown in Fig. 6A, the phase of the wireless signal received by the first receiver 331 is $\frac{4}{4}\pi$, while the phase of the wireless signal received by the second receiver 332 is $\frac{6}{4}\pi$, which have phase difference of $\frac{2}{4}\pi$.

Based on the experiment result of inventor, the phase difference between the two wireless signals can be optimally identified if the wavelength λ of the wireless signal is equal to or slightly large than two times of the distance D between the first receiver 331 and the second receiver 332. In this invention, the wavelength λ of the wireless signal is preset to be two times of the distance D. It should be noted that the directional signal has arbitrary wavelength and needs not to be equal to or slightly large than two times of the distance D, because the drone 3 is not orientated with reference to the directional signal sent by the remote control 4.

Accordingly, the processor 31 may apply the first formula below to calculate the relative orientation of the drone 3 with respect to the target device 5 once the processor 31 calculates the phase difference between the wireless signals received by the first receiver 331 and the second receiver 332.

$$\text{First formula}: \theta = \cos^{-1}\left[\frac{(\varphi_2 - \varphi_1)\lambda}{2\pi D}\right]$$

In above first formula, θ is the included angle between the plane $(\overline{d_1 d_2})$ connecting the first receiver 331 and second receiver 332 and the target device 5, $\varphi_2$ is the phase of the wireless signal received by the second receiver 332 (for example, above mentioned phase $\frac{6}{4}\pi$), $\varphi_1$ is the phase of the wireless signal received by the first receiver 331 (for example, above mentioned phase $\frac{4}{4}\pi$), λ is the wavelength of the wireless signal and D is the distance between the first receiver 331 and the second receiver 332, where $\lambda \geqq 2D$.

In the present invention, the processor 31 may control the drone 3 to rotate based on the above calculation result such that the phase difference between the phase $\varphi_1$ of the wireless signal received by the first receiver 331 and the phase $\varphi_2$ of the wireless signal received by the second receiver 332 is zero. The plane $(\overline{d_1 d_2})$ connecting the first receiver 331 and second receiver 332 orientates directly to the target device 5 if the processor 31 controls the drone 3 to rotate to null the phase difference to zero.

As shown in Fig. 6B, the drone 3 does not orientate directly to the target device 5 if the distance d3 between the third receiver 333 and the target device 5 is either different with the distance d1 between the first receiver 331 and the target device 5 or different with the distance d2 between the second receiver 332 and the target device 5. In the embodiment shown in Fig. 6B, the signal corresponding to the midpoint 334 is compared with the signal received at the third receiver 333.

In embodiment shown in Fig. 6B, the phase of the wireless signal received by the third receiver 333 is $\frac{7.9}{2}\pi$, while the phase of the wireless signal corresponding to the midpoint 334 is $\frac{5}{2}\pi$, the difference thereof is $\frac{2.9}{2}\pi$.

Accordingly, the processor 31 may apply the second formula below to calculate the another relative orientation component of the drone 3 to the target device 5 once the processor 31 calculates the phase difference between the wireless signal of the midpoint 334 and the wireless signal received by the third receiver 333, namely, applying the second formula to execute the step S14 shown in Fig. 5.

$$\text{Second formula}: \alpha = \cos^{-1}\left[\frac{\left(\varphi_3 - \frac{(\varphi_1 + \varphi_2)}{2}\right)\lambda}{2\pi L}\right]$$

In above second formula, α is the included angle between the plane $(\overline{d_0 d_3})$ connecting the midpoint 334 and the third receiver 333 and the target device 5, $\varphi_2$ is the phase of the wireless signal received by the second receiver 332, $\varphi_3$ is the phase of the wireless signal received by the third receiver 333, λ is the wavelength of the wireless signal, and L is the distance between the midpoint and the third receiver 333.

By exploiting the phase difference between two receivers (for example, the first receiver 331 and the second receiver 332), the orientation of the drone 3 with respect to the target device 5 can only be calibrated on two dimensional spaces (namely alone a plane). However, when the number of the receivers is equal to or more than three, the orientation of the drone 3 with respect to the target device can be calibrated on three dimensional spaces, thus more accurately orientate the drone 3. Therefore, in the present invention, the numbers of the receivers is at least three.

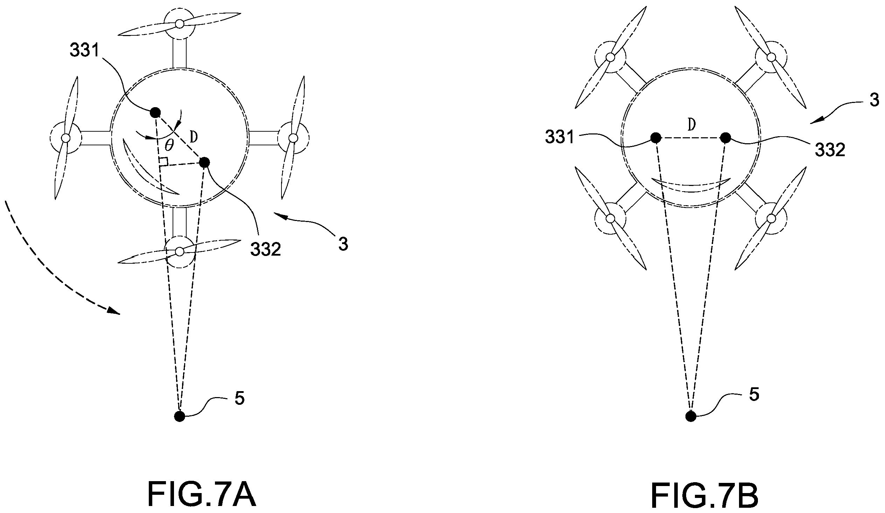

Figs. 7A and 7B are drawings showing the movement of the drone according to the first embodiment and the second embodiment. The drone 3 of the invention comprises at least three receivers 33. For the sake of illustration, the drone according to the first embodiment and the second embodiment in Figs. 7A and 7B are exemplified with the first receiver 331 and the second receiver 332 for describing the movement thereof.

In the embodiment shown in Fig. 7A, the drone 3 does not orientate directly toward the target device 5; therefore, the distance between the first receiver 331 and the target device 5 and the distance between the second receiver 332 and the target device 5 are different. Namely, the phase of the wireless signal received by the first receiver 331 is different with the phase of the wireless signal received by the second receiver 332. Moreover, an included angle θ is present between the plane $(\overline{d_1 d_2})$ connecting the first receiver 331 and second receiver 332 and the target device 5. At this time, the processor 31 of the drone 3 may control the rotation of the drone 3 (such as counterclockwise rotation in Fig. 7A) based on the phase difference between the wireless signals received by the first receiver 331 and the second receiver 332.

Afterward, as shown in Fig. 3B, with the counterclockwise rotation of the drone 3 controlled by the processor 31, the wireless signals received by the first receiver 331 and the second receiver 332 have the same phase. It means that the drone 3 already orientates toward the target device 5 and the orientation of the drone 3 is finished.

The above-mentioned orientation way may also be applied to the midpoint 334 and the third receiver 333, the detailed description thereof is omitted here for brevity. After the drone 3 is orientated, the user may effectively control the drone 3 for selfie, or control the drone 3 to move/rotate alone designated direction such that the drone 3 can be orientated to the direction designated by user.

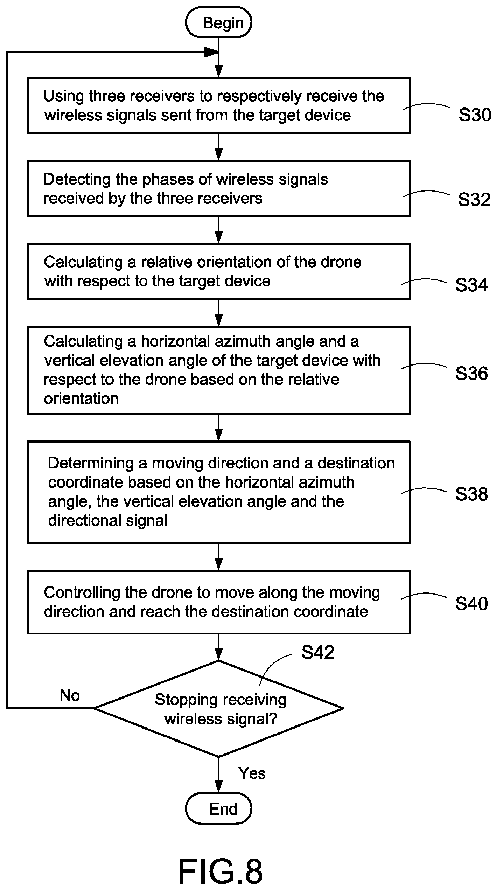

Fig. 8 is an orientation control flowchart according to the second embodiment of the present invention, which is similar to the flowchart in Fig. 5. In the embodiment shown in Fig. 8, the drone 3 also uses the three receivers to respectively receive wireless signals sent from the target device 5 (step S30), detects the phases of the wireless signals received by the three receivers with the phase detector 34 (step S32), and calculates a relative orientation of the drone 3 with respect to the target device 5 based on phase difference of the phases detected by the phase detector 34 (step S34).

In this embodiment, in step S36 the processor 31 further calculates a horizontal azimuth angle and a vertical elevation angle of the target device 5 with respect to the drone 3 based on the relative orientation calculated in step S34 (which will be detailed later). Moreover, the processor 31 determines a moving direction and a destination coordinate based on the horizontal azimuth angle, the vertical elevation angle and the directional signal sent from the remote control 4 (step S38). Finally, the processor 31 controls the drone 3 to move along the moving direction and reach the destination coordinate (step S40) to comply with the directional operation. Therefore, the drone 3 keeps orientating with the target device 5 as axial origin and is moved based on the directional operation of user, thus the drone 3, the remote control 4 and the target device 5 have effective interaction therebetween.

After step S40, the processor 31 determines whether the wireless signals are not received in step S42, namely, whether the receivers 33 stop receiving the wireless signals. The processor 31 ends the orientation control method if the wireless signal is not received. The processor 31 repeatedly executes step S30 to step S40 to continually orientate the drone 3 and control the movement of the drone 3 if the wireless signals are continually received.

With reference also to Fig. 9, this figure shows the relative positions of elements in the first embodiment. As described above, the processor 31 calculates the included angle θ between the plane ($\overline{d_1 d_2}$) connecting the first receiver 331 and second receiver 332 and the target device 5 and the included angle α between the plane ($\overline{d_0 d_3}$) connecting the midpoint 334 and the third receiver 333 and the target device 5 in step S14 of Fig. 5 and in step S34 of Fig. 8. As shown in Fig. 9, the processor 31 calculates a horizontal azimuth angle A and a vertical elevation angle B of the target device 5 with respect to the drone 3 according to the following third formula and the fourth formula.

$$\text{Third formula}: A = \tan^{-1} \frac{2L(\varphi_2 - \varphi_1)}{D(2\varphi_3 - \varphi_1 - \varphi_2)}$$

In above third formula, A is the horizontal azimuth angle, D is the distance between the first receiver 331 and the second receiver 332, L is the distance between the midpoint 334 and the third receiver 333, $\varphi_1$ is the phase of the wireless signal received by the first receiver 331, $\varphi_2$ is the phase of the wireless signal received by the second receiver 332 and $\varphi_3$ is the phase of the wireless signal received by the third receiver 333.

More particularly, according to the relative position of the target device 5 with respect to the plurality of receivers, we can derive the result: $\cos A = \frac{\cos \theta}{\cos \alpha}$. The value of $\cos \theta$ and $\cos \alpha$ can be obtained by above orientation calculation, therefore, the fourth formula can be derived as above.

$$\text{Fourth formula}: B = \cos^{-1} \sqrt{\left[\frac{(\varphi_2 - \varphi_1)\lambda}{2\pi D}\right]^2 + \left[\frac{(2\varphi_3 - \varphi_1 - \varphi_2)\lambda}{4\pi L}\right]^2}$$

In above fourth formula, B is the vertical elevation angle, D is the distance between the first receiver 331 and the second receiver 332, L is the distance between the midpoint 334 and the third receiver 333, $\varphi_1$ is the phase of the wireless signal received by the first receiver 331, $\varphi_2$ is the phase of the wireless signal received by the second receiver 332, $\varphi_3$ is the phase of the wireless signal received by the third receiver 333 and λ is the is the wavelength of the wireless signal.

More particularly, according to the relative position of the target device 5 with respect to the plurality of receivers, we can derive the result: $\cos B = \sqrt{\cos \theta^2 + \cos \alpha^2}$. The value of $\cos \theta$ and $\cos \alpha$ can be obtained by above orientation calculation, therefore, the fourth formula can be derived as above.

According to above third formula and fourth formula, the processor 31 can precisely calculate the relative position (orientation) of the drone 3 with respect to the target device 5 without using additional positioning device (such as GPS device), thus move the drone 3 with respect to user's directional operation.

As mentioned above, in the step S38 of Fig. 8, the processor 31 determines the moving direction and the destination coordinate based on the horizontal azimuth angle, the vertical elevation angle and the directional signal sent from the remote control 4. In this embodiment, the directional signal includes a directional azimuth angle and a directional elevation angle generated by the remote control 4 after receiving the directional operation from user.

More particularly, upon receiving the directional operation from user, the remote control 4 mainly uses the geomagnetic meter 44 to sense the geomagnetic change and generate the current azimuth angle for the remote control 4. The remote control 4 obtains the elevation angle thereof through using the gyroscope 45 and obtains a moving acceleration thereof through using the acceleration meter 46. Moreover, the remote control 4 uses the processing module 41 therein to calculate the directional azimuth angle based on the azimuth angle and to calculate the directional elevation angle based on the elevation angle and/or the moving acceleration. The remote control 4 generates the directional signal based on the directional azimuth angle and the directional elevation angle and then sends the directional signal through the transceiver module 43 therein.

In above mentioned step S38, the processor 31 receives the directional signal from the remote control 4. The processor 31 calculates the moving direction and the destination coordinate for the drone 3 based on an azimuth angle difference between the directional azimuth angle and the horizontal azimuth angle A and an elevation angle difference between the directional elevation angle and the vertical elevation angle B. Therefore, the drone 3 can be orientated according to the wireless signals sent from the target device 5 without needing GPS device. The drone 3 can be moved according to the directional signal sent from the remote control 4 to achieve precise interaction between user and the object to be photo-taken.

Thus, particular embodiments have been described. Other embodiments are within the scope of the following claims. For example, the actions recited in the claims may be performed in a different order and still achieve desirable results.

**Claims**

1. An orientation control method applied to a drone (3) having at least three receivers (33), the method comprising:

    a) using the at least three receivers (33) to receive a set of wireless signals sent from a target device (5) respectively;
    b) using a phase detector (34) to detect the phases of the wireless signals received by the at least three receivers (33);
    c) calculating a relative orientation of the drone (3) with respect to the target device (5) based on phase differences between the wireless signals received by the at least three receivers (33);
    d) receiving a directional signal sent from a remote control (4); and
    e) controlling a movement of the drone (3) based on the relative orientation and the directional signal.

2. The method in claim 1, wherein the at least three receivers (33) are radio wave receivers (33) and the wireless signal is radio wave signal.

3. The method in claim 2, wherein the three receivers (33) comprise a first receiver (331), a second receiver (332) and a third receiver (333), a wavelength of the wireless signal is equal to or larger than two times of a distance between the first receiver (331) and the second receiver (332).

4. The method in any of the claims 2 or 3, wherein the three receivers (33) are arranged at vertices of an isosceles triangle or vertices of an equilateral triangle.

5. The method in any of the claims 3 or 4, further comprising:

    f) determining whether the wireless signals are not received; and
    g) repeatedly executing the step a) to the step f) before stopping receiving the wireless signals.

6. The method in any of the claims 3 to 5, wherein the step c) calculates the relative orientation based on a first formula:

$$\theta = \cos^{-1}\left[\frac{(\varphi_2 - \varphi_1)\lambda}{2\pi D}\right] ,$$ wherein θ is the included angle between a plane connecting the first receiver (331)

and the second receiver (332) and the target device (5), $\varphi_2$ is a phase of the wireless signal received by the second receiver (332), $\varphi_1$ is a phase of the wireless signal received by the first receiver (331), $\lambda$ is the wavelength of the wireless signal and D is the distance between the first receiver (331) and the second receiver (332).

7. The method in claim 6, wherein step c) calculates the relative orientation based on a second formula:

$$\alpha = \cos^{-1}\left[\frac{\left(\varphi_3 - \frac{(\varphi_1+\varphi_2)}{2}\right)\lambda}{2\pi L}\right],$$

wherein $\alpha$ is an included angle between a plane connecting a midpoint (334) and the third receiver (333) and the target device (5), $\varphi_2$ is the phase of the wireless signal received by the second receiver (332), $\varphi_1$ is the phase of the wireless signal received by the first receiver (331), $\varphi_3$ is a phase of the wireless signal received by the third receiver (333), and L is a distance between the midpoint (334) and the third receiver (333), wherein the midpoint (334) is a midpoint of the first receiver (331) and the second receiver (332).

8. The method in any of the claims 1 to 7, further comprising following steps:

   h) calculating a horizontal azimuth angle (A) and a vertical elevation angle (B) of the target device (5) with respect to the drone (3) based on the relative orientation calculated;
   i) determining a moving direction and a destination coordinate of the drone (3) based on the horizontal azimuth angle (A), the vertical elevation angle (B) and the directional signal;
   j) moving the drone (3) along the moving direction to reach the destination coordinate.

9. The method in claim 8, wherein step h) calculates the horizontal azimuth angle (A) based on a third formula:

$$A = \tan^{-1}\frac{2L(\varphi_2-\varphi_1)}{D(2\varphi_3-\varphi_1-\varphi_2)},$$

wherein A is the horizontal azimuth angle, D is the distance between the first receiver (331) and the second receiver (332), L is the distance between the midpoint (334) and the third receiver (333), $\varphi_1$ is the phase of the wireless signal received by the first receiver (331), $\varphi_2$ is the phase of the wireless signal received by the second receiver (332) and $\varphi_3$ is the phase of the wireless signal received by the third receiver (333).

10. The method in claim 9, wherein the step h) calculates the vertical elevation angle (B) based on a fourth formula:

$$B = \cos^{-1}\sqrt{\left[\frac{(\varphi_2-\varphi_1)\lambda}{2\pi D}\right]^2 + \left[\frac{(2\varphi_3-\varphi_1-\varphi_2)\lambda}{4\pi L}\right]^2},$$

wherein B is the elevation angle, D is the distance between the first receiver (331) and the second receiver (332), L is the distance between the midpoint (334) and the third receiver (333), $\varphi_1$ is the phase of the wireless signal received by the first receiver (331), $\varphi_2$ is the phase of the wireless signal received by the second receiver (332), $\varphi_3$ is the phase of the wireless signal received by the third receiver (333) and $\lambda$ is the is the wavelength of the wireless signal.

11. The method in any of the claims 8 to 10, wherein the remote control (4) comprises a geomagnetic meter (44) for sensing an azimuth angle, a gyroscope (45) for sensing an elevation angle and an acceleration meter (46) for sensing an acceleration, wherein the remote control (4) is configured to generate a directional azimuth angle based on the azimuth angle and to generate a directional elevation angle based on the elevation angle and/or a moving acceleration of the remote control (4), the remote control (4) is configured to generate the directional signal based on the directional azimuth angle and the directional elevation angle; wherein in the step i) the remote control (4) is configured to determine the moving direction and the destination coordinate based on an azimuth angle difference between the directional azimuth angle and the horizontal azimuth angle (A) and an elevation angle difference between the directional elevation angle and the vertical elevation angle (B).

12. The method in claim 11, wherein the remote control (4) further comprises a human-machine interface (42) to receive a user input and modify the directional signal based on the user input to rotate the drone (3) toward a designated angle.

13. A drone comprising means to implement the method according to the claims 1 to 12.

FIG.1
(Related Art)

FIG.2
(Related Art)

FIG.3

EP 3 293 596 A1

FIG.4

EP 3 293 596 A1

```
                        ( Begin )
                            │
        ┌───────────────────┤
        │                   ▼
        │  ┌─────────────────────────────────────┐
        │  │ Using three receivers to respectively receive the │       S10
        │  │ wireless signals sent from the target device │
        │  └─────────────────────────────────────┘
        │                   │
        │                   ▼
        │  ┌─────────────────────────────────────┐
        │  │ Detecting the phases of wireless signals │           S12
        │  │ received by the three receivers │
        │  └─────────────────────────────────────┘
        │                   │
        │                   ▼
        │  ┌─────────────────────────────────────┐
        │  │ Calculating a relative orientation of the drone │      S14
        │  │ with respect to the target device │
        │  └─────────────────────────────────────┘
        │                   │
        │                   ▼
        │  ┌─────────────────────────────────────┐
        │  │ Controlling the rotation of the drone based on │      S16
        │  │ the calculated relative orientation and directional │
        │  │ signal │
        │  └─────────────────────────────────────┘
        │                   │              S18
        │                   ▼
        │            ╱────────────╲
        │  No       ╱  Stopping receiving ╲
        └──────────◄     wireless signal?    ►
                    ╲                    ╱
                     ╲────────────╱
                            │
                            │ Yes
                            ▼
                        ( End )
```

FIG.5

FIG.6B

FIG.6A

FIG.7B

FIG.7A

Begin

Using three receivers to respectively receive the wireless signals sent from the target device — S30

Detecting the phases of wireless signals received by the three receivers — S32

Calculating a relative orientation of the drone with respect to the target device — S34

Calculating a horizontal azimuth angle and a vertical elevation angle of the target device with respect to the drone based on the relative orientation — S36

Determining a moving direction and a destination coordinate based on the horizontal azimuth angle, the vertical elevation angle and the directional signal — S38

Controlling the drone to move along the moving direction and reach the destination coordinate — S40

S42

No — Stopping receiving wireless signal?

Yes

End

FIG.8

FIG.9

Europäisches
Patentamt

European
Patent Office

Office européen
des brevets

# EUROPEAN SEARCH REPORT

**Application Number**

EP 17 18 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br><br>A | US 2013/173088 A1 (CALLOU FRANCOIS [FR] ET AL) 4 July 2013 (2013-07-04)<br>* Abstract *<br>* figures 1-6 *<br>* paragraphs [0003] - [0016], [0050] - [0061], [0078] - [0079] *<br>* claim 1 *<br>----- | 1-5,8, 12,13<br>6,7,9-11 | INV.<br>G05D1/00<br>G05D1/02<br>G05D1/08<br>B64C39/02<br>G01S5/06 |
| X<br>Y<br><br>A | US 2015/153436 A1 (BENSON CHRISTOPHER P [US]) 4 June 2015 (2015-06-04)<br>* Abstract *<br>* figures 1-3 *<br>* paragraphs [0002] - [0004], [0013], [0015] - [0017], [0024] - [0028] *<br>* claim 1 *<br>----- | 1-3<br>4,5,8, 12,13<br>6,7,9,10 | |
| Y<br><br>A | CN 105 182 289 A (ZTE CORP) 23 December 2015 (2015-12-23)<br>* figure 1 *<br>* IMPORTANT NOTE: Page references refer to English Translation *<br>* page 1, lines 1-19 *<br>* page 4, line 21 - page 7, line 33 *<br>* claims 1-2 *<br>----- | 1-5,8, 12,13<br>6,7,9-11 | |

**TECHNICAL FIELDS SEARCHED (IPC)**

G05D
B64C
G01S

The present search report has been drawn up for all claims

| Place of search | Date of completion of the search | Examiner |
|---|---|---|
| Munich | 5 January 2018 | Roberts, Neil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 6080

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2018

| Patent document cited in search report | | | Publication date | Patent family member(s) | | | Publication date |
|---|---|---|---|---|---|---|---|
| US 2013173088 | A1 | | 04-07-2013 | CN | 103285599 | A | 11-09-2013 |
| | | | | EP | 2613213 | A1 | 10-07-2013 |
| | | | | FR | 2985329 | A1 | 05-07-2013 |
| | | | | JP | 2013144539 | A | 25-07-2013 |
| | | | | US | 2013173088 | A1 | 04-07-2013 |
| US 2015153436 | A1 | | 04-06-2015 | CA | 2923978 | A1 | 11-06-2015 |
| | | | | CN | 105765399 | A | 13-07-2016 |
| | | | | EP | 3077841 | A1 | 12-10-2016 |
| | | | | JP | 2017504787 | A | 09-02-2017 |
| | | | | US | 2015153436 | A1 | 04-06-2015 |
| | | | | WO | 2015084473 | A1 | 11-06-2015 |
| CN 105182289 | A | | 23-12-2015 | CN | 105182289 | A | 23-12-2015 |
| | | | | WO | 2015192599 | A1 | 23-12-2015 |

EPO FORM P0459

For more details about this annex : see Official Journal of the European Patent Office, No. 12/82